Europäisches Patentamt

(19) European Patent Office

Office européen des brevets

(11) EP 0 947 871 A1

(12) EUROPEAN PATENT APPLICATION

(43) Date of publication:
06.10.1999 Bulletin 1999/40

(51) Int. Cl.$^6$: G02C 1/00, G02C 7/02

(21) Application number: 98105824.1

(22) Date of filing: 31.03.1998

(84) Designated Contracting States:
AT BE CH DE DK ES FI FR GB GR IE IT LI LU MC NL PT SE
Designated Extension States:
AL LT LV MK RO SI

(71) Applicant: Yamaguchi, Kiyoshi
Atami-shi, Shizuoka-ken (JP)

(72) Inventor: Yamaguchi, Kiyoshi
Atami-shi, Shizuoka-ken (JP)

(74) Representative:
Müller, Enno, Dipl.-Ing. et al
Rieder & Partner
Anwaltskanzlei
Corneliusstrasse 45
42329 Wuppertal (DE)

(54) Multifocal lens

(57) The objective of this invention is to provide a multifocal lens which has no distortion in the middle, progressive power corrective region and has desired optical characteristics.

In the multifocal lens having in its outer curve the middle progressive power nearsightedness-corrective region for observing an intermediate-distance object, in order to eliminate distortion of the said region in said outer curve, a horizontally extending zonal region is provided in the center of the inner curve, and the curvature of said zonal region is designed to change progressively in correspondence with said middle progressive power nearsightedness-corrective portion in the said outer curve.

EP 0 947 871 A1

**Description**

BACKGROUND OF THE INVENTION

1. Technical Field of Invention

This invention relates to a multifocal lens used as a farsightedness and nearsightedness corrective spectacle lens, particularly to a multifocal lens having degrees progressively being changed in middle portion of the lens.

2. Description of the Related Art

A bifocal lens serving both for distant vision and for near vision in a single lens or a trifocal lens further adding an intermediate degree has been offered to a person having a reduced focus adjusting function. However, in these lenses a sharp boundary line appears between the region for farsightedness and that for nearsightedness.

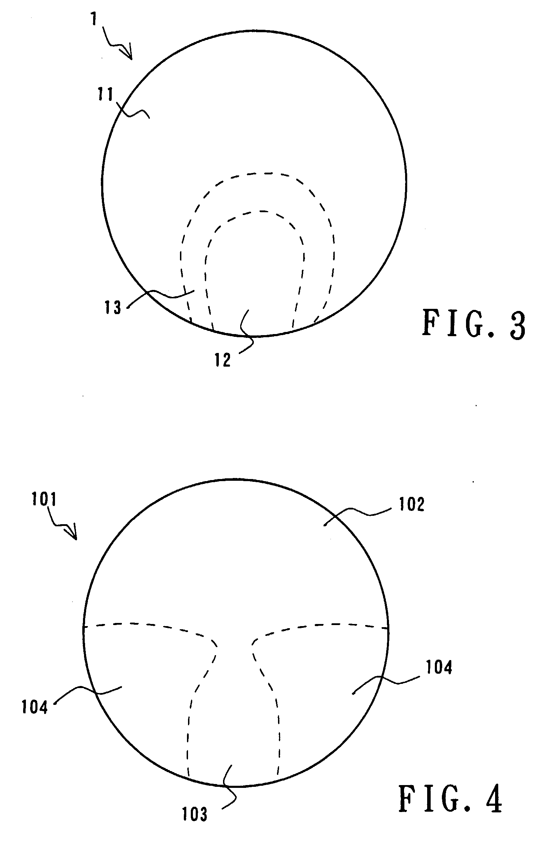

For this reason, a multifocal lens has been proposed which has degrees progressively being changed in the middle portion of the lens. Figure 4 shows a front view of the outer curve of a conventional multifocal lens. In the figure, the numeral 101 denotes a multifocal lens, 102 denotes the farsigtedness corrective region, and 104 denotes the middle progressive power corrective region.

The outer curve, a surface facing to an object to be observed, of the multifocal lens 101 consists of a spherical portion having a definite, relatively long radius of curvature in the upper farsightedness corrective region 102, a spherical portion having a definite, relatively short radius of curvature in the lower nearsightedness corrective region 103, and a middle progressive power portion 104 which is an aspherical portion with monotonically reducing radiuses of curvature. Further, the inner curve, a surface facing to the eye, of the conventional multifocal lens 101 consists of a spherical surface having a predetermined radius of curvature.

SUMMARY OF THE INVENTION

Because the conventional multifocal lens is composed of as mentioned above, a large astigmatism and distortion aberration unavoidably occurs especially in the side region 104, and this brings forth the defect that an uncomfortable feeling is perceived since an object in an intermediate distance gives a blurred image or a shaking of the image is felt when the head is moved. Furthermore, this also leads to narrow the farsightedness corrective region 102 and the nearsightedness corrective region 103.

The present invention was conducted to solve the problem mentioned above, and its objective is to obtain a multifocal lens having desired optical characteristics particularly without distortion in the middle progressive power corrective portion 104.

The multifocal lens concerning this invention provides in the outer curve a middle progressive power nearsightedness-corrective portion for observing an intermediate-distance object, and, to eliminate the distortion of said middle progressive power nearsightedness corrective portion of said outer curve, provides in the central portion of the inner curve a horizontally extending zone, and the radius of said zone is set to change progressively in correspondence with the middle progressive power nearsightedness-corrective portion of said outer curve.

BRIEF DESCRIPTION OF THE DRAWINGS

Figure 1 is a longitudinally sectioned central view showing the structure of an embodiment of the multifocal lens of the present invention.
Figure 2 is a figure obtained when the multifocal lens of Fig. 1 is seen from the inner curve side.
Figure 3 is a figure obtained when the multifocal lens of Fig. 1 is seen from the outer curve side.
Figure 4 is a figure obtained when the conventional multifocal lens is seen from the outer curve side.

DETAILED DESCRIPTION OF THE INVENTION

The embodiment of the invention is explained hereinafter through illustrations.

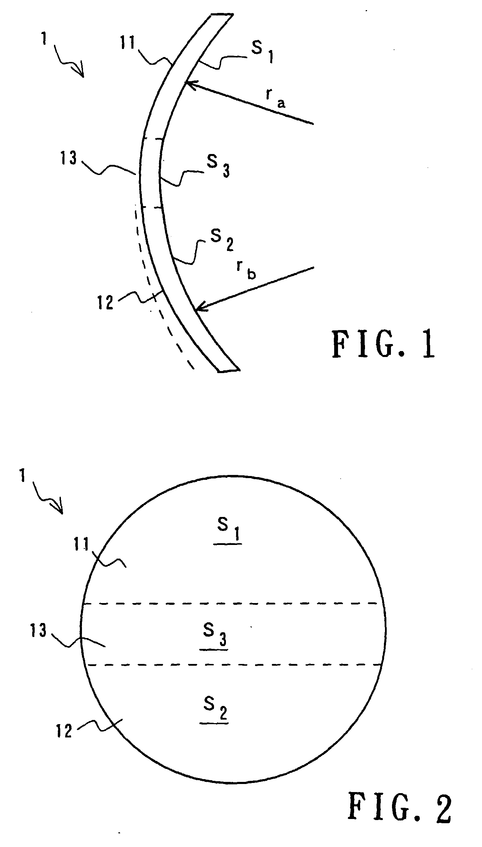

Fig. 1 shows a central, longitudinally sectioned face of the multifocal lens of this invention, Fig 2 is a figure obtained when multifocal lens of Fig. 1 is seen from the inner curve side, and Fig. 3 is a figure obtained when the same is seen from the outer curve side.

In the figures, the numeral 1 shows the multifocal lens, 11 shows the farsightedness corrective region, 12 shows the nearsightedness corrective region, and 13 shows the middle progressive power nearsightedness - corrective region.

As shown in Fig. 1 and Fig. 3 , the outer curve of the multifocal lens 1 consists of a spherical portion having a definite, relatively long radius of curvature in the farsightedness corrective region 11 extending to the upside and the left and right sides, a spherical portion having a definite, relatively short radius of curvature in the nearsightedness corrective region 12 in the central lower part, and an aspherical portion in the middle progressive power nearsightedness-corrective region 13 , portion having monotonically decreasing radiuses of curvature. The curvature of the middle progressive power nearsightedness-corrective region 13 decreases monotonically from the boundary facing to the region 11 toward the boundary facing to the region 12. The dotted line in the nearsightedness corrective region 12 of Fig. 1 shows an extension line of the spherical surface of the farsightedness corrective region 11.

Meanwhile, as shown in Fig. 2, the inner curve of the multifocal lens 1 is formed , in correspondence with the shape of the outer curve, by aspherical portion $S_1$, in the farsightedness corrective region 11 which has a radius of curvature(r) of $r_a$ ($r=r_a$, constant), a spherical portion $S_2$ in the nearsightedness corrective region 12 which has a radius of curvature(r) of $r_b$ ($r = r_b$, constant), and an aspherical portion $S_3$ in the middle progressive power nearsightedness-corrective region 13 wherein the radius of curvature(r) changes in the range of $r_a > r > r_b$. The aspherical portion $S_3$ is provided horizontally in the center of the inner curve in the form of a zone, and therein the curvature monotonically decreases from up to down.

Here, the values $r_a$ and $r_b$ standing for the radiuses of curvature in the spherical portions $S_1$ and $S_2$ of the inner curve, the width of the middle progressive power nearsightedness-corrective region 13, and the progressive change of the value r standing for the radius of curvature of the aspherical portion $S_3$ are adequately fixed in correspondence with the progressive power corrective structure formed on the outer curve side.

The inner curve of the multifocal lens 1 has hitherto been made spherical. However, in the present invention, particularly the progressive change of the value r indicating the radius of curvature of the aspherical portion $S_3$ is adjusted so that it restrains the distortion by making correspondence with the shape of the outer curve side. This yields a wide farsightedness corrective region 11 and eliminates the distortion, as Fig. 3.

As mentioned above, in the multifocal lens of the present invention, the radius of curvature of the aspherical portion $S_3$ in the middle progressive power nearsightedness- corrective region which is shaped like a zone in the inner curve side is set to progressively change in correspondence with various shapes of multifocal progressive power lenses of the outer curve side. Because of this, it is possible to obtain a multifocal lens which has desired optical characteristics without distortion in the middle progressive power nearsightedness-corrective region, especially without distortion in the region of the left and right sides.

Further, the multifocal lens of the present invention possesses in the outer curve the middle progressive power nearsightedness-corrective region, and is designed so that the radius of curvature of the aspherical portion $S_3$ in the zonal, middle, progressive power nearsightedness-corrective region in the inner curve changes progressively in correspondence with the shapes of the various progressive power multifocal lenses in the outer curve side. Hence, the optical axis in the nearsightedness corrective region nears the line of sight, and the moving distance of the line of sight becomes short.

power nearsightedness-corrective portion for observing an intermediate-distance object in the outer curve and in which, in order to eliminate the distortion of said middle progressive power nearsightedness-corrective portion of said outer curve, a horizontally extending zone is provided in the center of the inner curve and the curvature of said zone is designed so as to change progressively in correspondence with said middle progressive power nearsightedness-corrective portion of the outer curve.

## Claims

1. A multifocal lens which has a middle progressive

FIG. 1

FIG. 2

1

11

13

12

FIG. 3

101

102

104

104

103

FIG. 4

**EP 0 947 871 A1**

**European Patent Office**

**EUROPEAN SEARCH REPORT**

Application Number
EP 98 10 5824

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 4 274 717 A (DAVENPORT LAWRENCE J) 23 June 1981 * abstract * | 1 | G02C1/00 G02C7/02 |
| A | US 4 062 629 A (WINTHROP JOHN TALLEY) 13 December 1977 * abstract * | 1 | |
| A | DE 34 30 334 A (RODENSTOCK OPTIK G) 27 February 1986 * abstract * | 1 | |
| A | EP 0 632 308 A (NIPPON KOGAKU KK) 4 January 1995 * abstract * | 1 | |

TECHNICAL FIELDS SEARCHED (Int.Cl.6)

G02C

The present search report has been drawn up for all claims

| Place of search | Date of completion of the search | Examiner |
|---|---|---|
| THE HAGUE | 2 September 1998 | CALLEWAERT, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

6

**EP 0 947 871 A1**

**ANNEX TO THE EUROPEAN SEARCH REPORT
ON EUROPEAN PATENT APPLICATION NO.**          EP 98 10 5824

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-1998

| Patent document cited in search report | | Publication date | Patent family member(s) | | Publication date |
|---|---|---|---|---|---|
| US 4274717 | A | 23-06-1981 | CA | 1135544 A | 16-11-1982 |
| | | | DE | 3018578 A | 27-11-1980 |
| | | | FR | 2464497 A | 06-03-1981 |
| | | | GB | 2056106 A,B | 11-03-1981 |
| US 4062629 | A | 13-12-1977 | CA | 1012392 A | 21-06-1977 |
| | | | CH | 589860 A | 15-07-1977 |
| | | | CH | 583914 A | 14-01-1977 |
| | | | DE | 2439127 A | 27-02-1975 |
| | | | DE | 2462446 A | 31-03-1977 |
| | | | FR | 2270613 A | 05-12-1975 |
| | | | GB | 1484383 A | 01-09-1977 |
| | | | JP | 1236300 C | 17-10-1984 |
| | | | JP | 50046348 A | 25-04-1975 |
| | | | JP | 57053570 B | 13-11-1982 |
| | | | NL | 7410793 A,B, | 18-02-1975 |
| DE 3430334 | A | 27-02-1986 | AU | 612283 B | 04-07-1991 |
| | | | AU | 4162489 A | 04-01-1990 |
| | | | AU | 574226 B | 30-06-1988 |
| | | | AU | 4770985 A | 07-03-1986 |
| | | | AU | 4771385 A | 07-03-1986 |
| | | | WO | 8601308 A | 27-02-1986 |
| | | | WO | 8601309 A | 27-02-1986 |
| | | | EP | 0191831 A | 27-08-1986 |
| | | | EP | 0193552 A | 10-09-1986 |
| | | | JP | 62500122 T | 16-01-1987 |
| | | | JP | 2618622 B | 11-06-1997 |
| | | | JP | 62500403 T | 19-02-1987 |
| | | | US | 4955712 A | 11-09-1990 |
| | | | US | 5771089 A | 23-06-1998 |
| EP 0632308 | A | 04-01-1995 | JP | 7072433 A | 17-03-1995 |
| | | | US | 5557348 A | 17-09-1996 |

EPO FORM P0459

For more details about this annex : see Official Journal of the European Patent Office, No. 12/82

7